# EUROPEAN PATENT APPLICATION

(11) **EP 4 494 925 A1**
(43) Date of publication of application: **22.01.2025**
(21) Application number: 22931805.0
(22) Date of filing: 22.11.2022
(51) Int. Cl.: B60L 53/80

(54) **INTEGRATED VEHICLE BATTERY SWAP SYSTEM, METHOD AND DEVICE, AND STORAGE MEDIUM**

(30) Priority: 15.03.2022 CN 202210254111
(71) Applicant: Shanghai Westwell Technology Co., Ltd., Shanghai 200050 (CN); SHANGHAI KEWE TECHNOLOGY CO., LTD., Shanghai 201306 (CN)
(72) Inventor: TAN, Limin, Shanghai 200050 (CN); JIANG, Hua, Shanghai 200050 (CN); YUAN, Gang, Shanghai 200050 (CN); AN, Juyue, Shanghai 200050 (CN)
(74) Representative: De Vries & Metman
(86) International application number: PCT/CN2022/133464
(87) International publication number: WO 2023/173794

(57) **Abstract**

Provided are an integrated vehicle battery swap system, method and device, and a storage medium. The system comprises: a group of tracks (3); a battery swap robot (4), which moves along the tracks (3); at least one container battery compartment (1), which is arranged on a first side of the tracks (3), and which comprises a container body and several charging positions (11) that are located inside the container body for charging batteries, wherein the charging positions (11) are arranged in the length direction of the container battery compartment (1), a separation side plate (10) is provided on the side of the container battery compartment (1) that is adjacent to the tracks (3), and after the separation side plate (10) is separated from the container battery compartment (1), the charging positions (11) and the batteries therein are exposed; and a battery swap parking space (14), which is arranged on a second side of the tracks (3), wherein the battery swap robot (4) replaces, with a battery in the container battery compartment (1), a battery in a vehicle which is to be subjected to battery swapping and is parked in the battery swap parking space (14). The system can provide a modularized and containerized battery swap scheme, and can be easily moved to and disposed at a target battery swap position, and the spatial position of a battery swap station is greatly saved on.

## Description

### TECHNICAL FIELD

The present disclosure relates to the field of battery swapping of large new energy vehicles, specifically, to an integrated vehicle battery swapping system, method, device and storage medium.

### BACKGROUND

Most of current battery swapping modes used in electric vehicles is bottom battery swapping, which requires lifting up the vehicle and opening a battery compartment door at the bottom of the vehicle to swap the battery. However, large new energy vehicles such as heavy-duty unmanned trucks have a huge weight and obviously cannot use the bottom battery swapping mode. Moreover, an overall speed of the bottom battery swapping mode is slow, which reduces turnover efficiency of battery swapping stations.

At present, a top lifting battery swapping method is used in trucks, especially heavy-duty trucks. The top lifting battery swapping method is described in patent documents such as CN215552604U (a new energy heavy-duty truck battery swapping station), CN214689108U (An electric heavy-duty truck battery swapping station with two-way lanes), CN110862008A (An electric heavy-duty truck charging and swapping system), CN210634533U (A heavy-duty truck battery swapping station). Core equipment of technical solutions of these patent documents includes a crane, a vehicle mounted battery swapping base and a battery box. Main feature of these technical solutions is that the crane lifts a battery pack off the vehicle from the top and performs battery swapping operation. The battery swapping operation mainly includes the following steps.
① The vehicle enters a battery swapping waiting area, stops accurately, and then turns off the engine.
② ARFID device in the battery swapping station recognizes vehicle information.
③ The driver gets off the vehicle and scans a code to start the battery swapping.
④ The vehicle mounted battery swapping base is unlocked, and the crane positions the battery pack and lifts the battery pack off the vehicle.
⑤ The crane lifts a new battery pack into the vehicle, and then returns to its original position.
⑥ After the new battery pack is in place, the vehicle mounted battery swapping base is locked and the driver drives the vehicle away from the battery swapping station.

However, these technical solutions all have the following drawbacks.
① A height of the station is greater than 6 meters, which makes it difficult to transport the equipment as a whole.
② Each workstation requires a shifting device, which increases system complexity and cost.
③ Not suitable for mobile battery swapping by which the battery swapping station can be easily moved to a destination at any time to swap batteries for the trucks.
④ The battery pack will shake when being lifted, causing inaccurate positioning and a risk of falling.
⑤ Top lifting cannot meet battery swapping needs of some trucks, for example, a top structure of a mining truck will block the battery pack, making it impossible to lift from the top.

### SUMMARY

In view of the problems in the prior art, a purpose of the present disclosure is to provide an integrated vehicle battery swapping system, method, device and storage medium that can overcome the difficulties in the prior art. The present disclosure can provide a modular and containerized battery swapping solution which can be easily moved and laid out to target battery swapping locations, and can greatly save the space of the battery swapping station.

Embodiments of the present disclosure provide an integrated vehicle battery swapping system, including: a set of tracks; a battery swapping robot movable along the tracks; at least one container battery compartment arranged on a first side of the tracks and including a container body and several charging positions inside the container body for charging batteries, wherein the charging positions are arranged along a length direction of the container battery compartment, and a detachable side plate is provided on one side of the container battery compartment adjacent to the tracks, after the detachable side plate is detached from the container battery compartment, the charging positions and the batteries inside the container battery compartment are exposed; and a battery swapping location arranged on a second side of the tracks, wherein the battery swapping robot is configured to swap the batteries in the container battery compartment and batteries in a vehicle waiting for swapping battery which is parked at the battery swapping location.

In some embodiments, the battery swapping robot has a channel for linearly transporting the batteries along a direction perpendicular to the tracks, and the container battery compartments are used to set a minimum distance between the battery swapping robot and the tracks equal to a length of the battery.

**In** some embodiments, the length direction of the container battery compartment is parallel to an extension direction of the tracks.

**In** some embodiments, the integrated vehicle battery swapping system further includes at least one alignment component, wherein the alignment component is perpendicular to the second side of the tracks, enters at least partially into the battery swapping location and confines the vehicle waiting for swapping battery, and the battery swapping robot is configured to swap the battery for the vehicle waiting for swapping battery based on at least a relative position between the alignment component and the tracks.

In some embodiments, each of the alignment components includes a set of transmission belts rotating independently, after wheels of the vehicle waiting for swapping battery fall between the transmission belts and are confined, each set of the transmission belts rotates forward to pull the wheels closer to or push the wheels farther away from the tracks, and each set of the transmission belts rotates reverse to adjust an angle between a rolling direction of the wheels and an extension direction of the tracks.

In some embodiments, an extension direction of the transmission belts is perpendicular to the extension direction of the tracks, and a spacing between the transmission belts is smaller than a wheel diameter of the vehicle waiting for swapping battery.

In some embodiments, the integrated vehicle battery swapping system further includes a container control compartment, wherein the container control compartment is connected to one end of the container battery compartment, and is electrically connected to the charging positions of the container battery compartment, the battery swapping robot and the alignment components, respectively.

In some embodiments, a number of the alignment components is the same as a number of axles of the vehicle waiting for swapping battery, and the alignment components move based on an extension direction of the tracks, making a spacing between the alignment components match a spacing between the axles of the vehicle waiting for swapping battery.

In some embodiments, the detachable side plate is hinged to a bottom edge of the container battery compartment, the tracks are arranged on an inner side of the detachable side plate disposed in the container battery compartment, the battery swapping robot is confined to the tracks, and a robot accommodation space aligned along the charging positions is provided inside the container battery compartment; after the detachable side plate is closed, the battery swapping robot entering into the container battery compartment along the tracks is accommodated in the robot accommodation space.

In some embodiments, when the detachable side plate is flipped from the container battery compartment to ground, the tracks inside the detachable side plate and the battery swapping robot on the tracks are exposed; when the detachable side plate is closed to the container battery compartment, the battery swapping robot on the tracks is inserted into the robot accommodation space.

In some embodiments, at least one retractable alignment component is embedded in the detachable side plate, and a retractable direction of the alignment component is perpendicular to an extension direction of the tracks; when the detachable side plate is flipped from the container battery compartment to the ground, the alignment component extends out of the detachable side plate, perpendicular to the second side of the tracks, enters at least partially into the battery swapping location and confines the vehicle waiting for swapping battery, and the battery swapping robot swaps the battery for the vehicle waiting for swapping battery at least according to a relative position between the alignment component and the tracks; when the detachable side plate is closed to the container battery compartment, the alignment component is retracted into the detachable side plate.

In some embodiments, when greater than or equal to two of the container battery compartments are stacked vertically or arranged in a straight line along the length direction of the container battery compartments, the detachable side plates of the container battery compartments are all located on a same side.

In some embodiments, the integrated vehicle battery swapping system further includes a transport vehicle for transporting and/or loading and unloading the container battery compartment.

Embodiments of the present disclosure further provide an integrated vehicle battery swapping method using the integrated vehicle battery swapping system described above and including steps of: the detachable side plate being detached from the container battery compartment to expose the charging positions and the batteries inside; the battery swapping robot moving along the tracks to a battery compartment of the vehicle waiting for swapping battery located at the battery swapping location, and taking out a first battery; the battery swapping robot placing the first battery into an unoccupied charging position of the container battery compartment; the battery swapping robot moving to another charging position and taking out a second battery; the battery swapping robot returning along the tracks to the battery compartment of the vehicle waiting for swapping battery, and feeding the second battery into the battery compartment of the vehicle waiting for swapping battery.

Embodiments of the present disclosure further provide an integrated vehicle battery swapping device, including: a processor; a memory in which executable instructions of the processor are stored; wherein the processor is configured to perform the steps of the integrated vehicle battery swapping method described above by executing the executable instructions.

Embodiments of the present disclosure further provide a computer-readable storage medium for storing programs, wherein when the programs are executed by a processor, the steps of the integrated vehicle battery swapping method described above are implemented.

The purpose of the present disclosure is to provide the integrated vehicle battery swapping system, method, device, and storage medium that can provide the modular and containerized battery swapping solution, which can be easily moved and laid out to the target battery swapping locations, and greatly save the space of the battery swapping station.

### BRIEF DESCRIPTION OF THE DRAWINGS

Other features, objectives and advantages of the present disclosure will become more apparent by reading the detailed description of non-limiting embodiments with reference to the accompanying drawings.
FIG. 1 is a perspective view of an integrated vehicle battery swapping system of the present disclosure.
FIG. 2 is a front view of the integrated vehicle battery swapping system of the present disclosure.
FIG. 3 is a side view of the integrated vehicle battery swapping system of the present disclosure.
FIG. 4 is a top view of the integrated vehicle battery swapping system of the present disclosure.
FIG. 5 is a top view of a closed transportation state of a container battery compartment in the integrated vehicle battery swapping system of the present disclosure.
FIG. 6 is a front view of the closed transportation state of the container battery compartment in the integrated vehicle battery swapping system of the present disclosure.
FIG. 7 is a schematic diagram of an opening state of the container battery compartment in the integrated vehicle battery swapping system of the present disclosure.
FIG. 8 is a schematic diagram of an alignment component extending out from the container battery compartment in the integrated vehicle battery swapping system of the present disclosure.
FIG. 9 is a schematic diagram of a vehicle entering a battery swapping location when using the integrated vehicle battery swapping system of the present disclosure.
FIG. 10 is a schematic diagram of aligning the vehicle through the alignment component when using the integrated vehicle battery swapping system of the present disclosure.
FIG. 11 is a schematic diagram of alignment between a battery swapping robot and a battery compartment of the vehicle when using the integrated vehicle battery swapping system of the present disclosure.
FIG. 12 is a schematic diagram of the battery swapping robot taking out a battery from the vehicle when using the integrated vehicle battery swapping system of the present disclosure.
FIG. 13 is a schematic diagram of the battery swapping robot carrying the battery and moving to an unoccupied charging position when using the integrated vehicle battery swapping system of the present disclosure.
FIG. 14 is a schematic diagram of the battery swapping robot carrying the battery and reaching the unoccupied charging position when using the integrated vehicle battery swapping system of the present disclosure.
FIG. 15 is a schematic diagram of the battery swapping robot sending the battery into the unoccupied charging position when using the integrated vehicle battery swapping system of the present disclosure.
FIG. 16 is a schematic diagram of the battery swapping robot moving to another charging position with a fully charged battery when using the integrated vehicle battery swapping system of the present disclosure.
FIG. 17 is a schematic diagram of the battery swapping robot taking out the fully charged battery when using the integrated vehicle battery swapping system of the present disclosure.
FIG. 18 is a schematic diagram of the battery swapping robot carrying the battery and moving to the battery compartment when using the integrated vehicle battery swapping system of the present disclosure.
FIG. 19 is a schematic diagram of the battery swapping robot feeding the battery into the battery compartment when using the integrated vehicle battery swapping system of the present disclosure.
FIG. 20 is a schematic diagram of the vehicle leaving after battery swapping when using the integrated vehicle battery swapping system of the present disclosure.
FIG. 21 is a flowchart of an integrated vehicle battery swapping method of the present disclosure.
FIG. 22 is a schematic diagram of an integrated vehicle battery swapping device of the present disclosure.
FIG. 23 is a schematic diagram of a computer-readable storage medium according to an embodiment of the present disclosure.

### DETAILED DESCRIPTION

The following specific examples illustrate the implementation of the present disclosure, and those skilled in the art can easily understand other advantages and effects of the present disclosure from the disclosed content. The present disclosure can also be implemented or applied through different specific implementation methods, and various details in the present disclosure can be modified or changed according to different perspectives and application systems without departing from the spirit of the present disclosure. It should be noted that, when there is no conflict, embodiments and features in the embodiments of the present disclosure can be combined with each other.

The following is a detailed explanation of the embodiments of the present disclosure with reference to the accompanying drawings, so that those skilled in the art to which the present disclosure belongs can easily implement the present disclosure. The present disclosure can be embodied in various forms and is not limited to the embodiments described herein.

In the representation of the present disclosure, specific features, structures, materials and characteristics referred to in the representation of "one embodiment", "some embodiments", "examples", "specific examples" and "some examples" etc., are included in at least one embodiment or example of the present application. Moreover, the specific features, structures, materials and characteristics can be combined in any one or more embodiments or examples in an appropriate manner. **In** addition, when there is no conflict, technicians in this field can combine the different embodiments or examples represented in the present disclosure, as well as the features of different embodiments or examples.

**In** addition, terms "first" and "second" are only used to represent different components and cannot be understood as indicating or implying relative importance or implying numbers of technical features indicated. Therefore, a feature represented by "first" and "second" may explicitly or implicitly include at least one of the features. In the representation of the present disclosure, the meaning of "multiple" refers to two or more, unless otherwise specifically limited.

In order to clarify the present disclosure, devices unrelated to the description are omitted, and the same or similar constituent elements are represented by the same reference symbols.

In the representation of the present disclosure, connection between devices includes not only the situation of "direct connection", but also the situation of "indirect connection" with other components between the devices. In addition, when a certain device "includes" a component, as long as there is no particularly opposite record, it does not exclude other components, but means that other components may also be included.

When a device is "above" another device, it can be directly above the other device, or there may be other devices in between. When a device is directly on top of another device, there are no other devices in between.

Although the terms first, second, etc. are used in the present disclosure to refer to various elements in some embodiments, these elements should not be limited by these terms. These terms are only used to distinguish one component from another. For example, a first interface and a second interface are used to distinguish different interfaces. Furthermore, the singular forms used in the present disclosure like "one" and "the" are intended to include the plural form as well, unless the context indicates otherwise. It should be further understood that the terms "include" and "comprise" indicate the existence of features, steps, operations, elements, components, items, categories, and/or groups, but do not exclude the existence, appearance, or addition of one or more other features, steps, operations, elements, components, items, categories, and/or groups. The terms "or" and "and/or" used here are interpreted as inclusive or imply any one or any combination. Therefore, "A, B, or C" or "A, B, and/or C" means any of the following: A; B; C; A and B; A and C; B and C; A, B and C. Exceptions to the definition only occur when combinations of components, functions, steps, or operations are inherently mutually exclusive in certain ways.

The professional terms used here are only intended to refer to specific embodiments and are not intended to limit the scope of the present disclosure. The singular form used here also includes the plural form as long as the statement does not clearly indicate the opposite meaning. The meaning of "including" used in the description is to specify specific characteristics, regions, integers, steps, tasks, elements, and/or components, and does not exclude the existence or addition of other characteristics, regions, integers, steps, tasks, elements, and/or components.

Although not defined differently, all terms, including technical terms and scientific terms used herein, have the same meaning as those generally understood by those skilled in the art to which the present disclosure belongs. The interpretation of terms defined in commonly used dictionaries is to have meanings that are consistent with relevant technical literature and current prompts. As long as they are not defined, they should not be overly interpreted as ideal or very formulaic meanings.

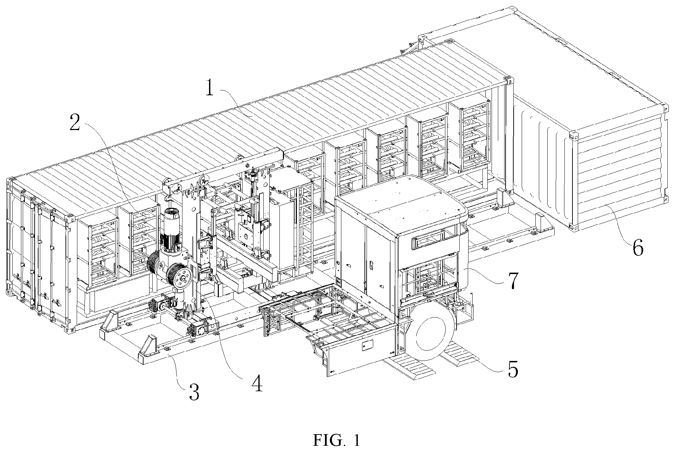

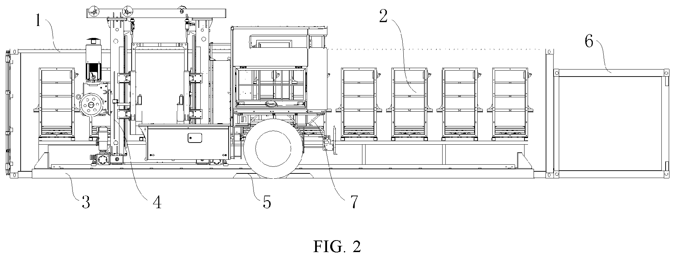

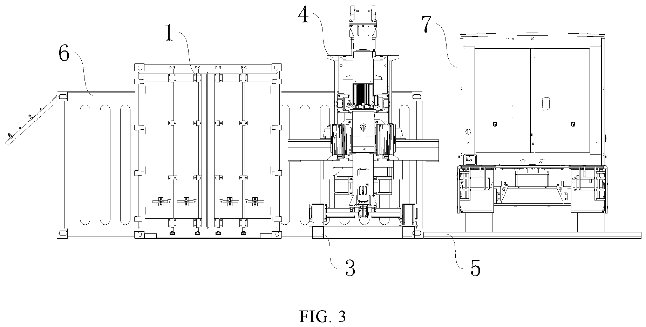

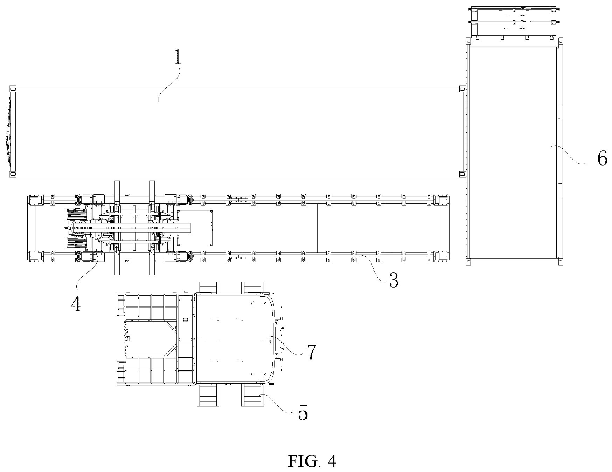

FIG. 1 is a perspective view of an integrated vehicle battery swapping system of the present disclosure. FIG. 2 is a front view of the integrated vehicle battery swapping system of the present disclosure. FIG. 3 is a side view of the integrated vehicle battery swapping system of the present disclosure. FIG. 4 is a top view of the integrated vehicle battery swapping system of the present disclosure. As shown in FIGS. 1 to 4, the integrated vehicle battery swapping system of the present disclosure includes: at least one container battery compartment 1, a set of tracks 3 and a battery swapping robot 4. The battery swapping robot 4 moves along the tracks 3. The container battery compartment 1 is arranged on a first side of the tracks 3 and includes a container body and several charging positions 11 inside the container body for charging batteries. The charging positions 11 are arranged along a length direction of the container battery compartment 1. A detachable side plate 10 is provided on one side of the container battery compartment 1 adjacent to the tracks 3, after the detachable side plate 10 is detached from the container battery compartment 1, the charging positions 11 and batteries inside the container battery compartment 1 are exposed. A battery swapping location 14 is arranged on a second side of the tracks 3, and the battery swapping robot 4 is configured to swap the batteries in the container battery compartment 1 and batteries in a vehicle waiting for swapping battery which is parked at the battery swapping location 14. The detachable side plate 10 can be manually disassembled or automatically opened by mechanical structure, and is not limited to this. The purpose of the present disclosure is to provide a new modular and containerized battery swapping device, which encapsulating the battery swapping station in a conventional container, and achieves the effects of fast assembly, easy transportation, light weight, high reliability, and convenient mobile power supply. A shell of the container battery compartment 1 in the present disclosure is a 40 foot standard container, but is not limited to this. The battery pack and the battery swapping robot 4 in the present disclosure are designed to be separated, and the battery swapping robot 4 is designed to be modular, which can be loaded into a standard container. It is expected that the entire equipment will be packaged in three containers (one 40-foot container and two 20-foot containers) and is easy for sea transportation and land transportation. The parallel arrangement of the container battery compartment 1 and the truck in the present disclosure can achieve parallel loading and unloading, which greatly saves the space position of the container battery compartment 1. The container battery compartment 1 is arranged on the side of the truck passage for battery swapping on the side, which is very suitable for battery swapping of container trucks in limited spaces such as ports. Moreover, the container battery compartment 1 can be installed on flatbed trailers, which facilitates fast road transportation to the destination and establishes a mobile container battery compartment for battery swapping of target vehicles.

In a selective embodiment, the battery swapping robot 4 has a channel for linearly transporting the batteries along a direction perpendicular to the tracks 3, and the container battery compartments 1 are used to set a minimum distance between the battery swapping robot 4 and the tracks 3 equal to a length of the battery. A length direction of the container battery compartment 1 is parallel to an extension direction of the tracks 3. In the present disclosure, a required working space for the battery swapping robot 4 is much smaller than that of existing battery swapping equipment, which can greatly reduce the overall space volume and facilitate layout in narrow spaces.

In a selective embodiment, the integrated vehicle battery swapping system further includes at least one alignment component 5, the alignment component 5 is perpendicular to the second side of the tracks 3, enters at least partially into the battery swapping location 14 and confines the vehicle waiting for swapping battery. The battery swapping robot 4 is configured to swap the battery for the vehicle waiting for swapping battery based on at least a relative position between the alignment component 5 and the tracks 3. The alignment component 5 assists the battery swapping robot 4 in improving the accuracy of alignment and swapping. The alignment component 5 can be configured with infrared or laser radar for auxiliary detection to detect and adjust postures of the vehicle waiting for swapping battery, therefore, a battery layer of the vehicle waiting for swapping battery is coaxial with the channel for linearly transporting batteries of the battery swapping robot 4, thereby improving the accuracy of the swapping action.

In a selective embodiment, each of the alignment component 5 includes a set of transmission belts rotating independently, after wheels of the vehicle waiting for swapping battery fall between the transmission belts and are confined, each set of the transmission belts rotates forward to pull the wheels closer to or push the wheels farther away from the tracks 3, and each set of the transmission belts rotates reverse to adjust an angle between a rolling direction of the wheels and an extension direction of the tracks 3. In this way, the requirement for accuracy of a path of the vehicle waiting for swapping battery entering the battery swapping location 14 is reduced.

In a selective embodiment, an extension direction of the transmission belts is perpendicular to the extension direction of the tracks 3, and a spacing between the transmission belts is smaller than a wheel diameter of the vehicle waiting for swapping battery. In this way, the wheels of the vehicle waiting for swapping battery are confined between the transmission belts, and the transmission belts are able to adjust positions and directions of the wheels by independently rotating.

In a selective embodiment, the integrated vehicle battery swapping system further includes a container control compartment 6, the container control compartment 6 is connected to one end of the container battery compartment 1, and is electrically connected to the charging positions 11 of the container battery compartment 1, the battery swapping robot 4 and the alignment components 5, respectively, thereby providing a usage scenario for operators to control, repair, or debug the container battery compartment 1 in the container control compartment 6, enhancing the flexibility of the container battery compartment 1 to cope with different scenarios.

In a selective embodiment, a number of the alignment components 5 is the same as a number of axles of the vehicle waiting for swapping battery, and the alignment components 5 move based on an extension direction of the tracks 3, making a spacing between the alignment components 5 match a spacing between the axles of the vehicle waiting for swapping battery, thereby improving the alignment accuracy.

In a selective embodiment, when greater than or equal to two of the container battery compartments 1 are stacked vertically or arranged in a straight line along the length direction of the container battery compartments 1, the detachable side plates 10 of the container battery compartments 1 are all located on a same side, thereby expanding the battery capacity of the container battery compartment 1, and enhancing the efficiency and redundancy of battery swapping for multiple vehicles. For example, by using single-layer or double-layer containers, the battery swapping station can be equipped with 10-20 or 8-16 battery boxes (pioneering), which enhances the utilization rate of batteries in the battery swapping station and greatly improves the operational capability of swapping.

In a selective embodiment, the integrated vehicle battery swapping system further includes a transport vehicle for transporting and/or loading and unloading the container battery compartment 1. The transport vehicle is used to transport the container battery compartment 1 to a next location that requires battery swapping, thereby enhancing the mobility efficiency of the container battery compartment 1.

In a selective embodiment, the transport vehicle is equipped with air suspension, which allows the container battery compartment 1 to be grounded for battery swapping and lifted for driving.

One embodiment of the present disclosure is as follows. Main components of the battery swapping station mainly include: a battery swapping robot 4, a container battery compartment 1, a vehicle mounted base, an alignment component 5 and an auxiliary system. Main functions of each component are as follows.

The battery swapping robot 4 unlocks the vehicle mounted base, accurately locates the battery, automatically removes dead batteries, and loads fully charged batteries.

The container battery compartment 1 stores batteries, manages the charging of the dead batteries, and conducts battery monitoring and testing.

The alignment component 5 identifies the information of the vehicle 7 waiting for swapping battery, exchanges information with the vehicle and the battery, guides the vehicle, and performs preliminary positioning.

The vehicle mounted base connects the battery and the vehicle 7 waiting for swapping battery, is equipped with a quick plug connector, and connects the battery and the electric motor of the vehicle 7 waiting for swapping battery.

The battery compartment base connects the battery and the charger and is equipped with a quick plug connector.

The charger is used for charging the batteries in the battery compartment.

The auxiliary system is equipped with a fire protection system, a video surveillance system, and a data server, performs comprehensive monitoring and data processing of the entire station, and connects to cloud servers.

The battery swapping process of the present disclosure is as follows.
① The vehicle enters the battery swapping station and reaches a fixed battery swapping position. The vehicle 7 waiting for swapping battery uploads battery swapping demand information (unmanned trucks and AGV vehicles automatically upload through wireless communication systems, while manual trucks and trailers click a battery swapping button to upload information).
② The vehicle battery base is unlocked and the battery swapping robot 4 locates the battery pack.
③ The battery swapping robot 4 adjusts its own state based on a parking position and a posture of the vehicle 7 waiting for swapping battery, and executes its own actions based on data obtained from the laser sensor. The battery swapping robot 4 firstly extends a fork and then uses a lifting mechanism to detach the battery pack from the battery swapping base on the vehicle.
④ The battery swapping robot 4 transports the battery pack to the charging station base assigned by the system for charging.
⑤ The battery swapping robot 4 grabs a fully charged battery pack from the battery compartment and forks it onto the vehicle, and the vehicle battery base is locked.
⑥ The vehicle 7 waiting for swapping battery drives out of the battery swapping station.

Based on the above technical solution of the present disclosure, the integrated vehicle battery swapping system has the following advantages.
1. Modular and containerized, which is convenient for sea and land transportation.
2. Strong universality, suitable for various vehicles such as Q-truck, E-truck, IGV, trailer, etc.
3. There is no need for a shifting base inside the container battery compartment.
4. The battery swapping robot has fewer movements and full alignment freedom.
5. Simple, reliable, truly unmanned, and remote.

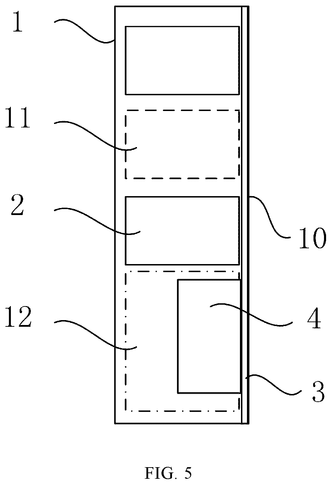

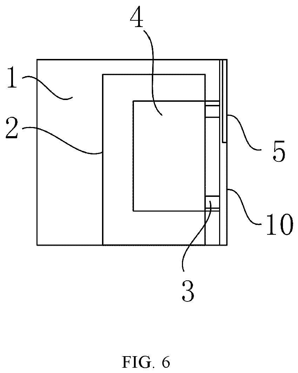

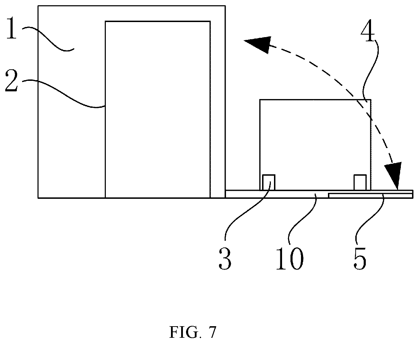

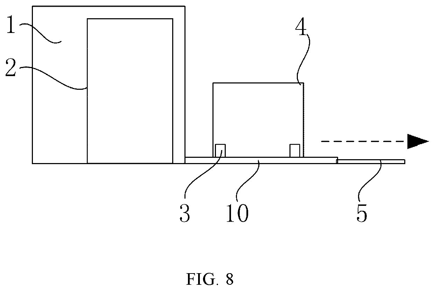

FIG. 5 is a top view of a closed transportation state of the container battery compartment in the integrated vehicle battery swapping system of the present disclosure. FIG. 6 is a front view of the closed transportation state of the container battery compartment in the integrated vehicle battery swapping system of the present disclosure. FIG. 7 is a schematic diagram of an opening state of the container battery compartment in the integrated vehicle battery swapping system of the present disclosure. FIG. 8 is a schematic diagram of the alignment component extending out from the container battery compartment in the integrated vehicle battery swapping system of the present disclosure. As shown in FIGS. 5 to 8, the present disclosure further provides another integrated container battery compartment 1, in which the detachable side plate 10 is hinged to the bottom edge of the container battery compartment 1, the tracks 3 are set on the inner side of the detachable side plate 10 located in the container battery compartment 1, and the battery swapping robot 4 is confined to the tracks 3 (lower rollers of the battery swapping robot 4 clamp the tracks 3, and even if the tracks 3 flip, the battery swapping robot 4 will not fall from the tracks 3). The container battery compartment 1 is equipped with a robot accommodation space 12 arranged along the charging positions 11. After the detachable side plate 10 is closed, the battery swapping robot 4 entering into the container battery compartment 1 along the tracks 3 is accommodated in the robot accommodation space 12. The detachable side plate 10 is driven by mechanical liquid railings and other devices installed inside the container battery compartment 1. When the detachable side plate 10 is flipped from the container battery compartment 1 to ground, the tracks 3 inside the detachable side plate 10 and the battery swapping robot 4 on the tracks 3 are exposed. When the detachable side plate 10 is closed to the container battery compartment 1, the battery swapping robot 4 on the tracks 3 is inserted into the robot accommodation space 12.

In a selective example, the detachable side plate 10 is embedded with at least one retractable alignment component 5, and a retractable direction of the alignment component 5 is perpendicular to an extension direction of the tracks 3. When the detachable side plate 10 is flipped from the container battery compartment 1 to the ground, the alignment component 5 extends out of the detachable side plate 10, perpendicular to the second side of the tracks 3, enters at least partially into the battery swapping location 14 and confines the vehicle waiting for swapping battery. At this time, the battery swapping robot 4 swaps the batteries for the vehicle waiting for swapping battery at least according to a relative position between the alignment component 5 and the tracks 3. When the detachable side plate 10 is closed to the container battery compartment 1, the alignment component 5 is retracted into the detachable side plate 10.

It can be seen that the container battery compartment 1 of the present disclosure can integrate the battery pack, the tracks 3, the battery swapping robot 4 and the alignment component 5 all into one container structure, thereby greatly reducing the volume during transportation and enhancing convenience. Furthermore, driven by the mechanical structure, the container battery compartment 1 can be automatically opened to achieve the effect of automatic layout of charging stations, and the entire process is completely completed by the container battery compartment 1 without human assistance.

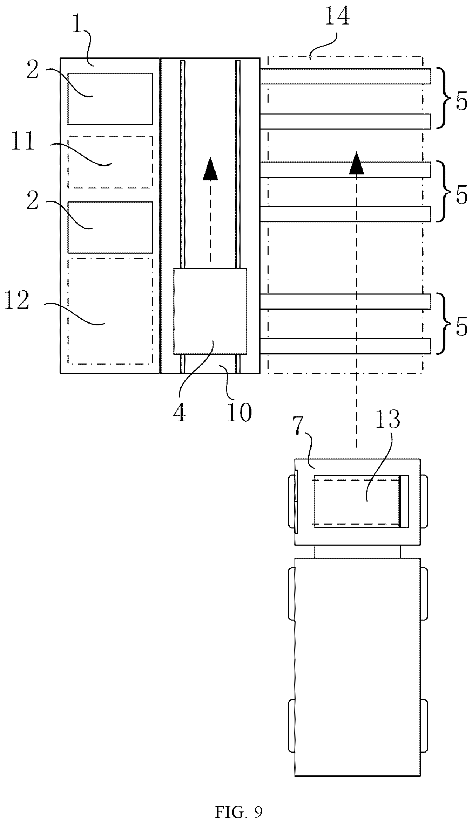

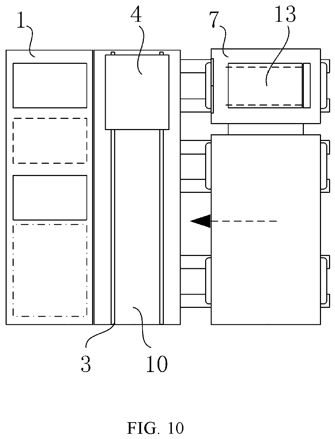

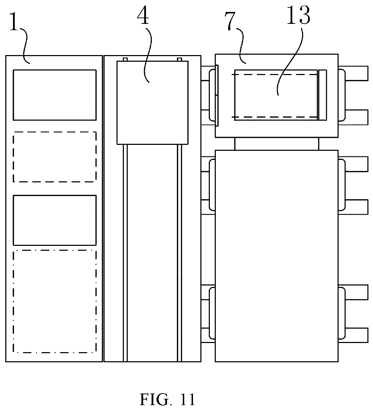

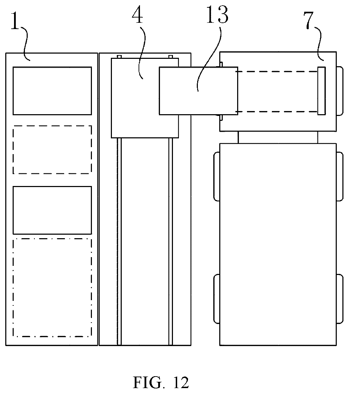

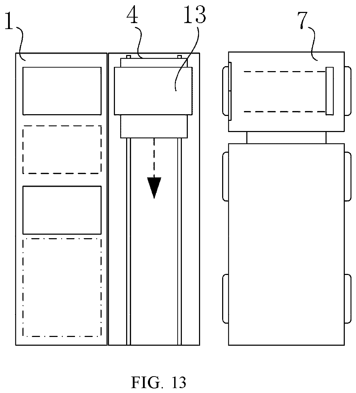

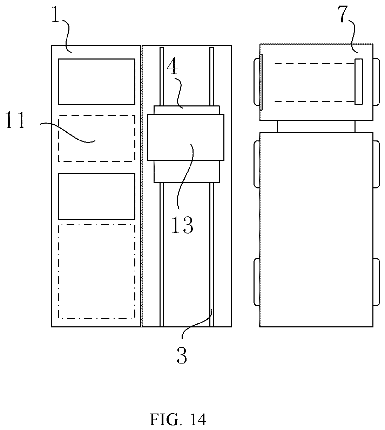

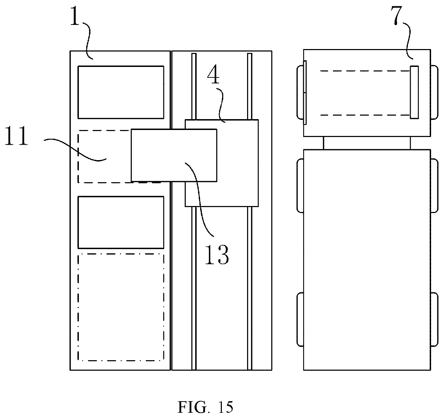

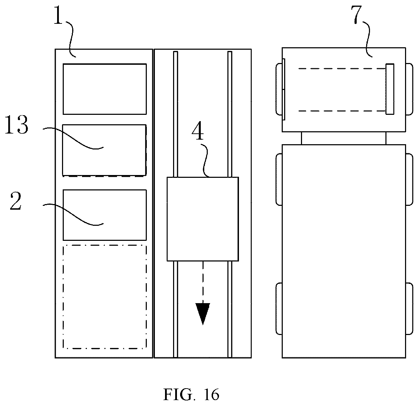

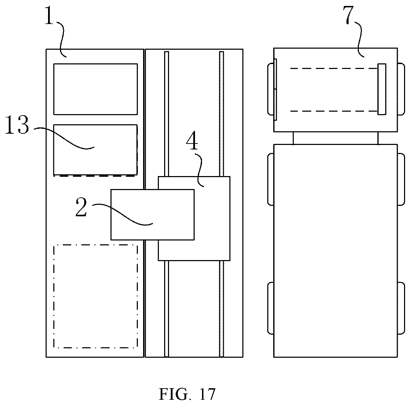

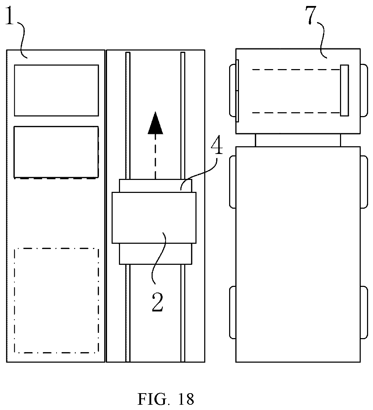

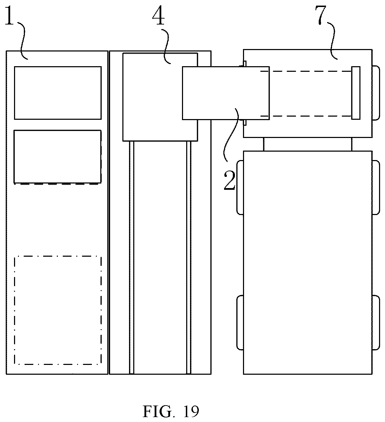

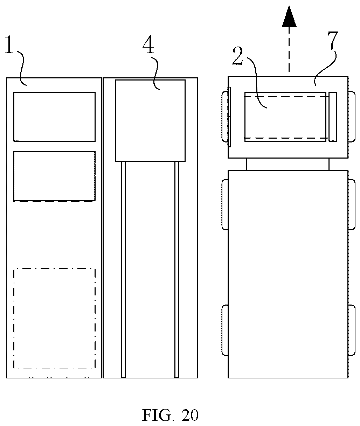

The implementation process of the present disclosure will be introduced below with reference to FIGS. 9 to 20. FIG. 9 is a schematic diagram of the vehicle entering the battery swapping location when using the integrated vehicle battery swapping system of the present disclosure. FIG. 10 is a schematic diagram of aligning the vehicle through the alignment component when using the integrated vehicle battery swapping system of the present disclosure. FIG. 11 is a schematic diagram of alignment between the battery swapping robot and the battery compartment of the vehicle when using the integrated vehicle battery swapping system of the present disclosure. FIG. 12 is a schematic diagram of the battery swapping robot taking out a battery from the vehicle when using the integrated vehicle battery swapping system of the present disclosure. FIG. 13 is a schematic diagram of the battery swapping robot carrying the battery and moving to an unoccupied charging position when using the integrated vehicle battery swapping system of the present disclosure. FIG. 14 is a schematic diagram of the battery swapping robot carrying the battery and reaching the unoccupied charging position when using the integrated vehicle battery swapping system of the present disclosure. FIG. 15 is a schematic diagram of the battery swapping robot sending the battery into the unoccupied charging position when using the integrated vehicle battery swapping system of the present disclosure. FIG. 16 is a schematic diagram of the battery swapping robot moving to another charging position with a fully charged battery when using the integrated vehicle battery swapping system of the present disclosure. FIG. 17 is a schematic diagram of the battery swapping robot taking out the fully charged battery when using the integrated vehicle battery swapping system of the present disclosure. FIG. 18 is a schematic diagram of the battery swapping robot carrying the battery and moving to the battery compartment when using the integrated vehicle battery swapping system of the present disclosure. FIG. 19 is a schematic diagram of the battery swapping robot feeding the battery into the battery compartment when using the integrated vehicle battery swapping system of the present disclosure. FIG. 20 is a schematic diagram of the vehicle leaving after battery swapping when using the integrated vehicle battery swapping system of the present disclosure. As shown in FIGS. 9 to 20, after the layout of the charging station in the container battery compartment 1 (FIGS. 5 to 8 have shown the process of the layout of the charging station in the container battery compartment 1, but not limited to this), the batteries and the charging positions 11 inside the container battery compartment 1 are exposed. The vehicle 7 waiting for swapping battery enters the battery swapping location 14, the alignment component 5 adjusts the length direction of the vehicle to be parallel to the tracks 3. Then, the alignment component 5 pulls the vehicle 7 waiting for swapping battery closer to the tracks 3. The door of the battery compartment of the vehicle 7 waiting for swapping battery is opened to expose a first battery 13 with low battery level. The battery swapping robot 4 moves along the tracks 3 to the battery compartment and takes out the first battery 13 along a straight line perpendicular to the tracks 3. The battery swapping robot 4 carries the first battery 13 and moves along the tracks 3 to an unoccupied charging position 11 in the container battery compartment 1, and pushes the first battery 13 to the unoccupied charging position 11 for charging. The battery swapping robot 4 continues moving along the tracks 3 to reach a second battery 2 with high battery level in the container battery compartment 1, and then takes out the second battery 2. The battery swapping robot 4 returns along the tracks 3 to the battery compartment of the vehicle 7 waiting for swapping battery, and sends the second battery 2 into the battery compartment of the vehicle 7 waiting for swapping battery. After the battery compartment door is closed, the second battery 2 supplies power to the vehicle 7 waiting for swapping battery. After the vehicle 7 waiting for swapping battery has completed battery swapping, it will leave the container battery compartment 1.

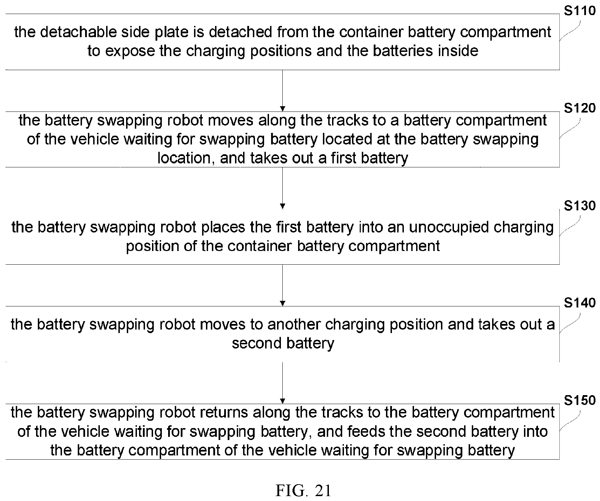

FIG. 21 is a flowchart of the integrated vehicle battery swapping method of the present disclosure. As shown in FIG. 21, the integrated vehicle battery swapping method of the present disclosure adopts the above-mentioned integrated vehicle battery swapping system, and includes the following steps.

S110, the detachable side plate is detached from the container battery compartment to expose the charging positions and the batteries inside.

S120, the battery swapping robot moves along the tracks to a battery compartment of the vehicle waiting for swapping battery located at the battery swapping location, and takes out a first battery.

S130, the battery swapping robot places the first battery into an unoccupied charging position of the container battery compartment.

S140, the battery swapping robot moves to another charging position and takes out a second battery.

S150, the battery swapping robot returns along the tracks to the battery compartment of the vehicle waiting for swapping battery, and feeds the second battery into the battery compartment of the vehicle waiting for swapping battery.

The integrated vehicle battery swapping method of the present disclosure can provide a modular and containerized battery swapping solution, which can be easily moved and laid out to the target battery swapping location, and greatly save the space of the battery swapping station.

The embodiments of the present disclosure further provide an integrated vehicle battery swapping device, including a processor and a memory which stores executable instructions of the processor. Wherein the processor is configured to execute the steps of the integrated vehicle battery swapping method by executing the executable instructions.

As shown above, the integrated vehicle battery swapping system of this embodiment of the present disclosure can provide a modular and containerized battery swapping solution, which can be easily moved and laid out to the target battery swapping location, and greatly save the space of the battery swapping station.

Technicians in the relevant technical field can understand that various aspects of the present disclosure can be implemented as systems, methods, or program products. Therefore, various aspects of the present disclosure can be specifically implemented in the form of a complete hardware implementation, a complete software implementation (including firmware, microcode, etc.), or a combination of hardware and software implementation, which can be collectively referred to as "circuits", "modules", or "platforms".

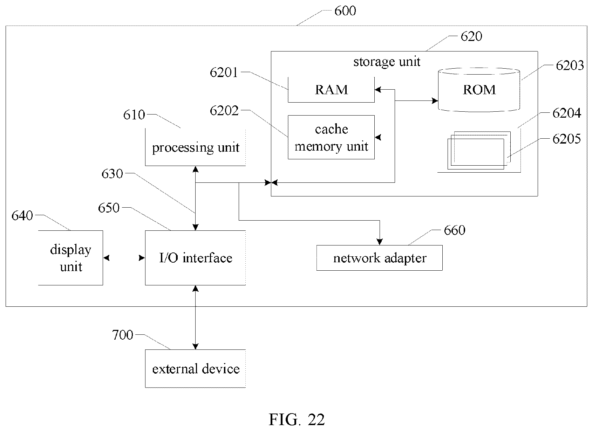

FIG. 22 is a schematic diagram of a structure of the integrated vehicle battery swapping device of the present disclosure. An electronic device 600 according to this embodiment of the present disclosure is described below with reference to FIG. 22. The electronic device 600 shown in FIG. 22 is merely an example and should not impose any limitations on the functionality and scope of use of embodiments of the present disclosure.

As shown in FIG. 22, the electronic device 600 is represented in the form of a general purpose computing device. Components of the electronic device 600 may include, but are not limited to, at least one processing unit 610, at least one storage unit 620, a bus 630 connecting different platform components including the storage unit 620 and the processing unit 610, a display unit 640, and the like.

Wherein the storage unit stores program code, and the program code may be executed by the processing unit 610 such that the processing unit 610 performs the steps of the integrated vehicle battery swapping method according to various exemplary embodiments of the present disclosure described above. For example, the processing unit 610 may perform steps such as those shown in FIG. 13 or FIG. 14.

The storage unit 620 may include a readable medium in the form of a volatile storage unit, such as a random access memory unit (RAM) 6201 and/or a cache memory unit 6202, and may further include a read-only storage unit (ROM) 6203.

The storage unit 620 may also include a program/utility 6204 having a set (at least one) of program modules 6205, such program modules 6205 may include, but are not limited to: an operating system, one or more disclosures, other program modules and program data, which may include an implementation of a networked environment in each of these examples or some combination.

The bus 630 May include one or more of several classes of bus structures, including a memory unit bus, a memory unit controller, a peripheral bus, a graphics acceleration port, a processing unit, or a local area bus using any of several bus structures.

The electronic device 600 may also communicate with one or more external devices 700 (e.g., keyboards, pointing devices, Bluetooth devices, etc.), and may also communicate with one or more devices that enable a user to interact with the electronic device 600, and/or with any device (e.g., routers, modems, etc.) that enables the electronic device 600 to communicate with one or more other computing devices. Such communication may be carried out via an input/output (I/O) interface 650. And, the electronic device 600 may also communicate with one or more networks (e.g., a local area network (LAN), a wide area network (WAN), and/or a public network, such as the Internet) via a network adapter 660. The network adapter 660 may communicate with other modules of the electronic device 600 via the bus 630. It should be appreciated that, although not shown in the figures, other hardware and/or software modules may be used in conjunction with the electronic device 600, including, but not limited to: microcode, device drives, redundant processing units, external disk drive arrays, RAID systems, tape drives, and data backup storage platforms.

Embodiments of the present disclosure further provide a computer-readable storage medium for storing programs, steps of the integrated vehicle battery swapping method are implemented when the program is executed. In some possible embodiments, aspects of the present disclosure may also be implemented in the form of a program product including program codes, when the program product is run on a terminal device, the program codes make the terminal device perform the steps of the integrated vehicle battery swapping method according to various exemplary embodiments of the present disclosure described above.

As shown above, the integrated vehicle battery swapping system of this embodiment of the present disclosure is capable of providing a modular, containerized battery swapping solution that can be easily moved and laid out to a target power exchange location, and that greatly saves space for the battery swapping stations.

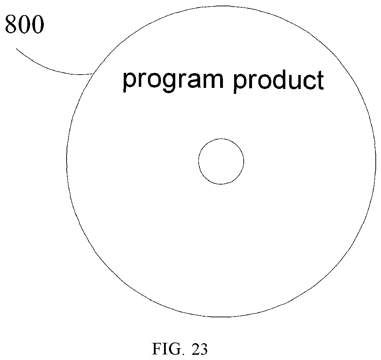

FIG. 23 is a schematic diagram of a structure of the computer-readable storage medium of the present disclosure. With reference to FIG. 23, a program product 800 for implementing the method described above according to the embodiments of the present disclosure is shown, which may employ a portable compact disk read-only memory (CD-ROM) and include program codes, and which may be run on a terminal device, such as a personal computer. However, the program product of the present disclosure is not limited herein, the readable storage medium may be any tangible medium that contains or stores programs that may be used by, or in combination with, instruction execution systems, apparatus, or devices.

The program product may employ any combination of one or more readable mediums. The readable medium may be a readable signal medium or a readable storage medium. The readable storage medium may include but is not limited to a system, a device, or an apparatus that is electrical, magnetic, optical, electromagnetic, infrared, or semiconducting, or any combination of the above. More specific examples of the readable storage mediums (a non-exhaustive list) include: an electrical connection having one or more wires, a portable disk, a hard disk, a random access memory (RAM), a read-only memory (ROM), an erasable programmable read-only memory (EPROM or flash memory), a fiber optic, a portable compact disk read-only memory (CD-ROM), an optical storage device, a magnetic storage device, or any suitable combination of the foregoing.

The computer-readable storage medium may include data signals carrying readable program codes and propagated in the baseband or as part of a carrier. Such propagated data signals may take a variety of forms, including, but not limited to, electromagnetic signals, optical signals, or any suitable combination of the foregoing. The readable storage medium may also be any readable medium other than a readable storage medium. The readable medium can send, propagate, or transmit programs. The programs are used by, or in conjunction with, instruction execution systems, apparatus, or devices. The program codes contained on the readable storage medium may be transmitted using any suitable medium including, but not limited to, wireless, wired, fiber optic cable, RF, etc., or any suitable combination of the foregoing.

Program codes for performing the operations of the present disclosure may be written in any combination of one or more programming languages, including object-oriented programming languages such as Java, C++, etc., and also conventional procedural programming languages such as the "C" or similar programming languages. The program code may be executed entirely on the user computing device, partially on the user device, as a stand-alone software package, partially on the user computing device and partially on a remote computing device, or entirely on a remote computing device or server. **In** situations involving a remote computing device, the remote computing device may be connected to the user computing device via any kind of network, including a local area network (LAN) or a wide area network (WAN), or, alternatively, may be connected to an external computing device (e.g., by utilizing an Internet Service Provider to connect via the Internet).

In summary, the purpose of the present disclosure is to provide integrated vehicle battery swapping systems, methods, devices and storage mediums, which can provide modular, containerized battery swapping solutions that can be easily moved and laid out to a target battery swapping location, and that significantly save the space of the battery swapping station.

The foregoing is a further detailed description of the present disclosure in combination with specific selective embodiments, and it cannot be concluded that the specific implementation of the present disclosure is limited to these descriptions. For ordinary technicians in the technical field to which the present disclosure belongs, under the premise of not departing from the concept of the present disclosure, some simple deductions or substitutions can be made, all of which should be regarded as belonging to the scope of protection of the present disclosure.

## Claims

1. An integrated vehicle battery swapping system comprising:
a set of tracks;
a battery swapping robot movable along the tracks;
at least one container battery compartment arranged on a first side of the tracks and comprising a container body and several charging positions inside the container body for charging batteries, wherein the charging positions are arranged along a length direction of the container battery compartment, and a detachable side plate is provided on one side of the container battery compartment adjacent to the tracks, after the detachable side plate is detached from the container battery compartment, the charging positions and the batteries inside the container battery compartment are exposed; and
a battery swapping location arranged on a second side of the tracks, wherein the battery swapping robot is configured to swap the batteries in the container battery compartment and batteries in a vehicle waiting for swapping battery which is parked at the battery swapping location.

2. The integrated vehicle battery swapping system according to claim 1, wherein the battery swapping robot has a channel for linearly transporting the batteries along a direction perpendicular to the tracks, and the container battery compartments are used to set a minimum distance between the battery swapping robot and the tracks equal to a length of the battery.

3. The integrated vehicle battery swapping system according to claim 1, wherein the length direction of the container battery compartment is parallel to an extension direction of the tracks.

4. The integrated vehicle battery swapping system according to claim 1 further comprising at least one alignment component, wherein the alignment component is perpendicular to the second side of the tracks, enters at least partially into the battery swapping location and confines the vehicle waiting for swapping battery, and the battery swapping robot is configured to swap the battery for the vehicle waiting for swapping battery based on at least a relative position between the alignment component and the tracks.

5. The integrated vehicle battery swapping system according to claim 4, wherein each of the alignment components comprises a set of transmission belts rotating independently, after wheels of the vehicle waiting for swapping battery fall between the transmission belts and are confined, each set of the transmission belts rotates forward to pull the wheels closer to or push the wheels farther away from the tracks, and each set of the transmission belts rotates reverse to adjust an angle between a rolling direction of the wheels and an extension direction of the tracks.

6. The integrated vehicle battery swapping system according to claim 5, wherein an extension direction of the transmission belts is perpendicular to the extension direction of the tracks, and a spacing between the transmission belts is smaller than a wheel diameter of the vehicle waiting for swapping battery.

7. The integrated vehicle battery swapping system according to claim 5 further comprising a container control compartment, wherein the container control compartment is connected to one end of the container battery compartment, and is electrically connected to the charging positions of the container battery compartment, the battery swapping robot and the alignment components, respectively.

8. The integrated vehicle battery swapping system according to claim 4, wherein a number of the alignment components is the same as a number of axles of the vehicle waiting for swapping battery, and the alignment components move based on an extension direction of the tracks, making a spacing between the alignment components match a spacing between the axles of the vehicle waiting for swapping battery.

9. The integrated vehicle battery swapping system according to claim 1, wherein the detachable side plate is hinged to a bottom edge of the container battery compartment, the tracks are arranged on an inner side of the detachable side plate disposed in the container battery compartment, the battery swapping robot is confined to the tracks, and a robot accommodation space aligned along the charging positions is provided inside the container battery compartment;
wherein after the detachable side plate is closed, the battery swapping robot entering into the container battery compartment along the tracks is accommodated in the robot accommodation space.

10. The integrated vehicle battery swapping system according to claim 9, wherein when the detachable side plate is flipped from the container battery compartment to ground, the tracks inside the detachable side plate and the battery swapping robot on the tracks are exposed;
when the detachable side plate is closed to the container battery compartment, the battery swapping robot on the tracks is inserted into the robot accommodation space.

11. The integrated vehicle battery swapping system according to claim 10, wherein at least one retractable alignment component is embedded in the detachable side plate, and a retractable direction of the alignment component is perpendicular to an extension direction of the tracks;
when the detachable side plate is flipped from the container battery compartment to the ground, the alignment component extends out of the detachable side plate, perpendicular to the second side of the tracks, enters at least partially into the battery swapping location and confines the vehicle waiting for swapping battery, and the battery swapping robot swaps the battery for the vehicle waiting for swapping battery at least according to a relative position between the alignment component and the tracks;
when the detachable side plate is closed to the container battery compartment, the alignment component is retracted into the detachable side plate.

12. The integrated vehicle battery swapping system according to claim 1, wherein when greater than or equal to two of the container battery compartments are stacked vertically or arranged in a straight line along the length direction of the container battery compartments, the detachable side plates of the container battery compartments are all located on a same side.

13. The integrated vehicle battery swapping system according to claim 1 further comprising a transport vehicle for transporting and/or loading and unloading the container battery compartment.

14. An integrated vehicle battery swapping method using the integrated vehicle battery swapping system according to claim 1 comprising steps of:
the detachable side plate being detached from the container battery compartment to expose the charging positions and the batteries inside;
the battery swapping robot moving along the tracks to a battery compartment of the vehicle waiting for swapping battery located at the battery swapping location, and taking out a first battery;
the battery swapping robot placing the first battery into an unoccupied charging position of the container battery compartment;
the battery swapping robot moving to another charging position and taking out a second battery;
the battery swapping robot returning along the tracks to the battery compartment of the vehicle waiting for swapping battery, and feeding the second battery into the battery compartment of the vehicle waiting for swapping battery.

15. An integrated vehicle battery swapping device, comprising:
a processor;
a memory in which executable instructions of the processor are stored;
wherein the processor is configured to perform the steps of the integrated vehicle battery swapping method of claim 14 by executing the executable instructions.

16. A computer-readable storage medium for storing programs, wherein when the programs are executed by a processor, the steps of the integrated vehicle battery swapping method of claim 14 are implemented.
